# EUROPEAN PATENT APPLICATION

(11) **EP 2 752 397 A1**
(43) Date of publication of application: **09.07.2014**
(21) Application number: 12827851.2
(22) Date of filing: 18.05.2012
(51) Int. Cl.: C04B 33/04, C04B 35/626, C04B 35/64, F16L 59/06

(54) **VACUUM INSULATION MATERIAL INCLUDING A COMPOUND GETTER AGENT**

(30) Priority: 31.08.2011 KR 20110088052
(71) Applicant: LG Hausys, Ltd., Seoul 150-721 (KR)
(72) Inventor: LEE, Myung, Hwaseong-si Gyeonggi-do 445-761 (KR); JUNG, Seong-Moon, Daejeon 305-707 (KR); LEE, Ju-Hyung, Gyeonggi-do 437-080 (KR); KIM, Eun-Joo, Gyoenggi-do 437-080 (KR)
(74) Representative: Winter, Brandl, Fürniss, Hübner, Röss, Kaiser, Polte - Partnerschaft
(86) International application number: PCT/KR2012/003941
(87) International publication number: WO 2013/032108

(57) **Abstract**

The present invention relates to a vacuum insulation material using a getter material obtained by mixing zeolite and calcium oxide, and more particularly, to a vacuum insulation material in which zeolite having a large specific surface area to absorb the greater part of remaining water from the vacuum insulation material is mixed with calcium oxide and used as a getter material, thereby achieving improved initial thermal conductivity.

## Description

### Technical Field

The present invention relates to a vacuum insulation material using a getter material in which zeolite and calcium oxide are mixed, and more particularly, to a vacuum insulation material in which zeolite having a large specific surface area to absorb most of remaining water from the vacuum insulation material is mixed with calcium oxide and used as a getter material to thereby improve initial thermal conductivity.

### Background Art

In general, a vacuum insulation material includes a core material, an outer material, and a getter material.

Typically, glass fibers, fumed silica and the like have been used as the core material, and a multi-layered film including a metal deposition film or an aluminum foil has been used as the outer material. The getter material serves to improve thermal conductivity while maintaining durability by absorbing water and air in the vacuum insulation material, and calcium oxide (CaO) has been generally used as the getter material.

Calcium oxide is inexpensive and thus economically advantageous. However, calcium oxide has drawbacks in that reaction with water in the vacuum insulation material is significantly slow due to a very small specific surface area (BET) of 1 m²/g or less and it is difficult to achieve further reduction in initial thermal conductivity due to bad reactivity with a small amount of water remaining in the vacuum insulation material even after vacuum exhaustion. Although reactivity may be partially improved at high temperature, it is difficult to achieve complete removal of remaining water from the vacuum insulation material.

Korean Patent Laid-open Publication No. 2011-77860 discloses a stick-type getter material to improve thermal performance, but does not disclose adjustment of a composition for the getter material.

Therefore, there is a need for a method of further reducing initial thermal conductivity at room temperature using inexpensive calcium oxide.

### Disclosure

### Technical Problem

The inventors of the present invention has studied and endeavored to improve thermal conductivity using calcium oxide, and thus found that a getter material including a mixture of calcium oxide and zeolite is effective in improvement of initial thermal conductivity of a vacuum insulation material, thereby completing the present invention.

Therefore, an aspect of the present invention is to provide a vacuum insulation material in which a getter material including a mixture of calcium oxide and zeolite is used to improve thermal conductivity.

### Technical Solution

In accordance with an aspect of the present invention, a vacuum insulation material includes a getter material in which zeolite and calcium oxide are mixed.

### Advantageous Effects

According to the present invention, the vacuum insulation material employs a mixture of zeolite having a large specific surface area and calcium oxide as a getter material, thereby significantly reducing thermal conductivity at room temperature. Therefore, the vacuum insulation material according to the present invention has a better insulating effect than typical vacuum insulation materials using only calcium oxide as a getter material.

### Description of Drawings

Fig. 1 is a graph depicting water absorbency of zeolite granules and powder depending upon time.
Fig. 2 is a graph showing variation in thermal conductivity depending upon time for vacuum insulation materials prepared in Examples and Comparative Example.

### Best Mode

The above and other aspects, features, and advantages of the present invention will become apparent from the detailed description of the following embodiments in conjunction with the accompanying drawings. It should be understood that the present invention is not limited to the following embodiments and may be embodied in different ways, and that the embodiments are provided for complete disclosure and thorough understanding of the present invention by those skilled in the art. The scope of the present invention is defined only by the claims. Like components will be denoted by like reference numerals throughout the specification.

Hereinafter, a vacuum insulation material including a composite getter material according to embodiments of the invention will be described in more detail with reference to the accompanying drawings.

According to the present invention, a vacuum insulation material includes a getter material which includes a mixture of zeolite and calcium oxide.

Zeolite has a relatively large specific surface area and thus exhibits so good reactivity at room temperature to absorb most remaining water from the vacuum insulation material, thereby improving initial thermal conductivity.

Zeolite and calcium oxide are mixed in a ratio of 1 ∼ 50 wt% zeolite and 50 - 99 wt% calcium oxide, preferably in a ratio of 1 ∼ 30 wt% zeolite and 70 ∼ 99 wt% calcium oxide. If the content of zeolite is less than this range, remaining water in the insulation material cannot be rapidly absorbed, thereby providing an insignificant effect in improvement of thermal conductivity. If the content of zeolite is greater than this range, zeolite reacts with water to form calcium hydroxide and thus releases water exceeding a water-absorbency limit, as opposed to calcium oxide by which absorbed water is not released again, thereby providing a problem in that improvement of thermal conductivity is obstructed by released water. Accordingly, zeolite is mixed within the foregoing content range so as to absorb initial remaining water from the vacuum insulation material.

Zeolite is classified into A, X, and Y types in accordance with molar ratio of Si/Al. Considering that the getter material of the vacuum insulation material must adsorb water well while preventing the adsorbed water from being released therefrom, the vacuum insulation material according to the present invention may employ an X-type zeolite having a molar ratio of (Si/Al) of less than 1.5, preferably from 1.0 to 1.5. If the molar ratio of Si/Al for zeolite is greater than 1.5, water detachability of the getter material increases, thereby increasing thermal conductivity.

In addition, zeolite may have a specific surface area of 300 m²/g to 1000 m²/g and a pore size of 0.1 nm to 100 nm to improve water absorbency.

Zeolite is subjected to heat treatment at high temperature so as to have an activated state. When zeolite is subjected to heat treatment at high temperature, the remaining water is reduced and thus loss of ignition is also significantly decreased. When zeolite having such an activate state is used, it is more effective to absorb the remaining water from the insulation material. Heat treatment is performed at a temperature of 300°C to 1000°C for 1 to 10 hours, preferably at a temperature of 500°C to 600°C for 1 to 5 hours.

When the activated zeolite is provided in powder form and exposed to atmosphere, the zeolite quickly absorbs water, thereby making it difficult to control an initial amount of water upon preparation of the vacuum insulation material. Accordingly, the zeolite is provided in granule form and thus has a relatively small surface area exposed to atmosphere, thereby advantageously reducing water absorbency in atmosphere. The granules have a diameter ranging from 0.1 mm to 10 mm, preferably from 1 mm to 5 mm. If the diameter of the granules is less than 0.1 mm, it is difficult to control water absorbency since water in atmosphere is quickly adsorbed. If the diameter of the granule is greater than 10 mm, it is difficult to achieve improvement in thermal conductivity since water absorbency in the insulation material is deteriorated.

To prepare zeolite in granule form, powder zeolite may be mixed with an inorganic binder. Here, the inorganic binder preferably includes at least one compound selected from the group consisting of silica compounds, silane compounds, alumina compounds and clay, more preferably silica sol, alumina sol, sodium silicate, etc.

The getter material according to the present invention may be applied to a vacuum insulation material by a typical method, and the vacuum insulation material according to the present invention has further improved thermal performance than typical vacuum insulation materials using only calcium oxide as a getter material by reducing initial thermal conductivity at room temperature.

Next, the present invention will be explained in more detail with reference to examples and comparative examples.

However, it should be understood that these examples and comparative examples are provided for illustration only and are not to be in any way construed as limiting the present invention.

### Preparative Example 1: Preparation of zeolite granules

5 g of zeolite powder (Shanghai Gascheme Co., Ltd., GP132), a molar ratio of Si/Al of which is 1.3, was subjected to heat treatment at 520°C for 2 hours. Thereafter, the zeolite powder was mixed with 1 g of silica sol as an inorganic binder, thereby preparing granules having a diameter of 1.8mm.

The prepared granules were subjected to heat treatment in a drying oven at 180°C for 2 hours, followed by evaporation of water, thereby producing zeolite granules.

### Example 1: Preparation of vacuum insulation material

1 g of the zeolite granules prepared in Preparative Example 1 and 4 g of calcium oxide were put into a polyethylene terephthalate (PET) non-woven bag having a unit weight of 25 g/m² to prepare a pouch, which in turn was dried at 180°C for 2 hours. In addition, a core material was dried in a drying oven at 120°C for 1 hour and removed therefrom. Then, the pouch was placed on the core material, inserted into an outer material, and put into preparation equipment for a vacuum insulation material. Under a vacuum of 4 Pa or less for 60 seconds, the outer material was sealed, thereby finally preparing a vacuum insulation material.

### Example 2

A vacuum insulation material was prepared in the same manner as in Example 1 except that 0.5 g of the zeolite granules prepared in Preparative Example 1 and 4.5 g of calcium oxide were mixed.

### Example 3

A vacuum insulation material was prepared in the same manner as in Example 1 except that 2 g of the zeolite granules prepared in Preparative Example 1 and 3 g of calcium oxide were mixed.

### Example 4

A vacuum insulation material was prepared in the same manner as in Example 1 except that 4 g of the zeolite granules prepared in Preparative Example 1 and 1 g of calcium oxide were mixed.

### Example 5

A vacuum insulation material was prepared in the same manner as in Example 1 except that 1 g of zeolite powder (Shanghai Gascheme Co., Ltd., GP132), a molar ratio of Si/Al of which is 1.3, and 4 g of calcium oxide were mixed.

### Example 6

5 g of zeolite powder (Zeolyst Co., Ltd., CBV 100), a molar ratio of Si/Al of which is 5.1, was subjected to heat treatment at 520°C for 2 hours.

The prepared powder was subjected to heat treatment in a drying oven at 180°C for 2 hours, followed by evaporation of water, thereby producing zeolite powder.

Next, a vacuum insulation material was prepared in the same manner as in Example 1 except that 1 g of the zeolite powder and 4 g of calcium oxide were mixed.

### Comparative example 1

A vacuum insulation material was prepared in the same manner as in Example 1 except that 5 g of calcium oxide prepared in pouch form without zeolite granules was used as a getter material.

### Measurement of thermal conductivity

For the vacuum insulation materials including the getter materials in Examples and Comparative Example, thermal conductivity was measured by calculating heat transfer rate, heat quantity, and area using a measurement instrument (heat flow type, HC-074-200, EKO Co., Ltd.) when heat was applied from an upper heat sensing plate to a lower heat sensing plate. Samples of the vacuum insulation materials were produced to have a size of 200 mm x 200 mm x 8 mm.

To confirm improvement in thermal conductivity, heat conductivity of each of the vacuum insulation materials prepared in Examples and Comparative Example was measured at room temperature about 1 day after preparation. Measurement results are shown in Table 1.

**Table 1**

| | Thermal conductivity (mW/mK) |
|---|---|
| Example 1 | 3.582 |
| Example 2 | 3.601 |
| Example 3 | 3.624 |
| Example 4 | 3.643 |
| Example 5 | 3.651 |
| Example 6 | 3.740 |
| Comparative Example 1 | 3.869 |

As shown in Table 1, the vacuum insulation materials prepared using the getter material according to Examples had significantly lowered heat conductivity at room temperature. However, the vacuum insulation material prepared using only calcium oxide as the getter material had a thermal conductivity of 3.8 mW/mK or higher. Thus, it could be seen that the vacuum insulation materials prepared in Examples had significantly improved thermal conductivity.

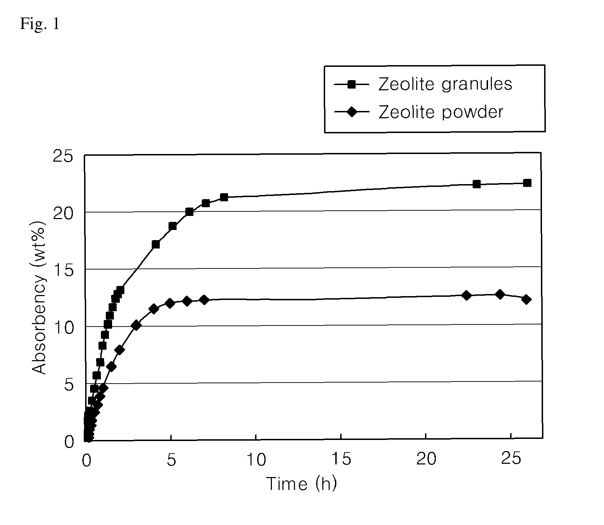

In addition, the zeolite granules provided better thermal conductivity than the zeolite powder. It is considered that this phenomenon was caused by rapid absorption of water by the zeolite powder. For reference, water absorbency depending upon time is compared between the zeolite granules and the zeolite powder in the graph of Fig. 1. Referring to Fig. 1, the zeolite granules have a slower initial water absorption rate than the zeolite powder, and this characteristic of the zeolite granules is advantageous to reduce thermal conductivity.

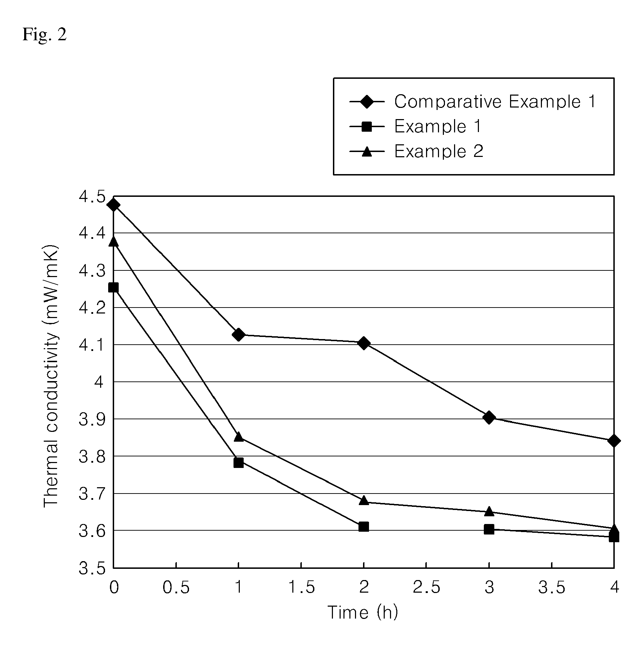

Variation in thermal conductivity depending upon time between the vacuum insulation materials prepared in Examples and Comparative Example was measured, and results are shown in Table 2 and Fig. 2.

**Table 2**

| Elapsed time (hour) | Thermal conductivity (mW/mK) | | |
|---|---|---|---|
| | Comparative Example 1 | Example 1 | Example 2 |
| 0 | 4.481 | 4.258 | 4.383 |
| 1 | 4.130 | 3.782 | 3.850 |
| 2 | 4.107 | 3.605 | 3.678 |
| 3 | 3.904 | 3.601 | 3.651 |
| 4 | 3.841 | 3.582 | 3.602 |

As shown in Table 2, the vacuum insulation materials prepared in Examples had lower initial thermal conductivity than that of Comparative Example.

Based on such measurement results of heat conductivity, it can be seen that that the vacuum insulation material according to the present invention has better thermal performance than a typical insulation material.

Although some embodiments have been described herein, it should be understood that these embodiments are given by way of illustration only, and that various modifications, variations, and alterations can be made without departing from the spirit and scope of the present invention. Therefore, the scope of the present invention should be limited only by the accompanying claims and equivalents thereof.

## Claims

1. A vacuum insulation material comprising a getter material in which zeolite and calcium oxide are mixed.

2. The vacuum insulation material according to claim 1, wherein 1 wt% to 50 wt% of zeolite and 50 wt% to 99 wt% of calcium oxide are mixed.

3. The vacuum insulation material according to claim 1 or 2, wherein the zeolite has a molar ratio of Si/Al ranging from 1.0 to 1.5.

4. The vacuum insulation material according to claim 3, wherein the zeolite has a specific surface area of 300 m²/g to 1000 m²/g and a pore size of 0.1 nm to 100 nm.

5. The vacuum insulation material according to claim 1 or 2, wherein the zeolite is subjected to heat treatment at a temperature of 300°C to 1000°C for 1 ∼ 10 hours.

6. The vacuum insulation material according to claim 1 or 2, wherein the zeolite is prepared in granule form.

7. The vacuum insulation material according to claim 6, wherein the zeolite granules are prepared by mixing zeolite powder and an inorganic binder.

8. The vacuum insulation material according to claim 6, wherein the granules have a diameter of 0.1 mm to 10 mm.

9. The vacuum insulation material according to claim 7, wherein the inorganic binder comprises at least one compound selected among silica compounds, silane compounds, alumina compounds, and clay.
